# EUROPEAN PATENT SPECIFICATION

(11) **EP 1 511 588 B1**
(45) Date of publication and mention of the grant of the patent: **15.08.2007**
(21) Application number: 03732774.9
(22) Date of filing: 06.06.2003
(51) Int. Cl.: B21F 27/12, B65G 33/06

(54) **DEVICE TO STORE, TRANSPORT AND DISTRIBUTE METAL ELEMENTS, METHOD TO MAKE METAL CAGES USING SAID DEVICE AND RELATIVE CAGE-MAKING MACHINE**
VORRICHTUNG ZUM LAGERN, TRANSPORTIEREN, UND VERTEILEN VON METALLTEILEN, VERFAHREN ZUM HERSTELLEN VON BEWEHRUNGSKÖRBEN MITTELS DIESER VORRICHTUNG UND ZUGEHÖRIGE HERSTELLUNGSMACHINE
DISPOSITIF DE STOCKAGE, DE TRANSPORT ET DE DISTRIBUTION D'ELEMENTS METALLIQUES, PROCEDE DE FABRICATION DE CAGES METALLIQUES DANS LEQUEL LEDIT DISPOSITIF EST UTILISE ET MACHINE A FABRIQUER DES CAGES ASSOCIEE

(30) Priority: 07.06.2002 IT UD20020128; 07.06.2002 IT UD20020129
(43) Date of publication of application: 09.03.2005
(73) Proprietor: Battistella Giosue' E Giuliano Srl, 31050 Ponzano Veneto (IT)
(72) Inventor: BATTISTELLA, Giosuè, I-31050 Ponzano Veneto (IT); BATTISTELLA, Giuliano, I-31050 PONZANO VENETO (TV) (IT)
(74) Representative: Petraz, Davide Luigi
(86) International application number: PCT/IB2003/002147
(87) International publication number: WO 2003/103875

(56) References cited:
- EP-A- 0 811 442
- EP-A- 0 947 453
- WO-A-83/00647
- WO-A-85/05053
- WO-A-87/05544
- WO-A-99/17896
- FR-A- 2 727 948
- US-A- 1 984 659

## Description

### FIELD OF THE INVENTION

The present invention concerns a device to store, transport and distribute metal elements, for example but not only metal elements for reinforcement purposes.

The present invention also concerns a method and the relative machine to make metal reinforcement cages for bearing structures made of reinforced concrete such as girders, pillars or foundations, in which said device is used.

### BACKGROUND OF THE INVENTION

The metal cages employed as reinforcement elements in bearing structures made of reinforced concrete comprise a plurality of longitudinal rods with which transverse stirrups are associated at longitudinal intervals. The stirrups can be of any geometry whatsoever, for example polygonal, circular, meshed or other, and can be either open or closed.

The cages can be assembled manually or partly automatically; the stirrups can be pre-arranged geometrically and then the longitudinal rods positioned and attached, or vice versa, the longitudinal rods can be pre-arranged and then the stirrups progressively inserted therein.

The method to make such cages is normally long and complex, since the workers are obliged to make continuous measurements before attaching the longitudinal rods, with a high probability of errors.

When partly automatic machines are used, it is necessary to frequently modify the configuration of the machine according to the cage to be assembled, which entails a loss of time and long downtimes of the machine, with consequent disadvantages in economic terms.

Moreover, it is in any case necessary to arrange the stirrups with the exact interaxis and it is indispensable that the workers are extremely careful; furthermore, they are obliged to move along the forming cage to perform the welding or tying operations.

A further disadvantage is that it is difficult to position and keep the rods, also during the attachment operation, at the various heights with respect to the stirrups according to the design specifications.

Various devices have been proposed which provide a substantially automatic feed of the suitably distanced stirrups towards a welding position. One known solution, described for example in EP 0 811 442, provides that the stirrups are moved by means of racks which can move step-wise and taken one at a time into correspondence with a welding position where they are welded to the longitudinal rods. Other solutions, an example of which is also described in EP 0 811 442, provide that the stirrups are moved by means of chain-type conveying means on which they are kept in suspension to be taken to the welding position.

These known solutions all have problems, however, in the correct support and feed of the stirrups, also depending on the need to operate with stirrups which on each occasion have a different shape, size and thickness - even considerably different.

Moreover, such solutions have problems in the correct positioning and reciprocal distancing of the stirrups, and also in the adjustment and control of the feed movement, weights and inertia in play, noise, complex assembly and installation, and still other problems.

Applicant has devised and embodied the present invention to overcome these shortcomings and to obtain other advantages.

### SUMMARY OF THE INVENTION

The present invention is set forth and characterized in the respective main claims, while the dependent claims describe other characteristics of the present invention.

The purpose of the present invention is to provide a device to store, transport and distribute reinforcement elements, such as stirrups or suchlike, suitable to allow a temporary and orderly accumulation of such elements. Is in particular a purpose of the invention to provide a device able to displace said elements in one direction and the other, and at the desired speed, and possibly able to be combined with functions of counting, packing and tying said reinforcement elements.

A further purpose of the present invention is to provide a method and a machine to make metal cages, in which such a device is used, so as to make the assembly operations of the cage itself more practical, quick and easy.

Another purpose of the invention is to provide a method and a machine which allow to reduce the overall assembly times of metal cages which may even be different from each other in shape and size of the stirrups, in the interaxis and in the number and position of the longitudinal rods, being the rods inner or outer, lower, upper or intermediate with respect to the stirrups.

Another purpose is to provide a machine which can perform the operations to make the cage, also in a completely automatic way. Is a further purpose of the invention to provide a machine able to perform the operations to make the cage, also in a completely automatic way, and having its overall bulk substantially the same of the length of the.cage itself.

A cage-making machine in which the device according to the invention is applied comprises at least the features of the claim 14.

According to an embodiment, the machine also comprises a supporting plane, arranged downstream of the stirrup positioning/translation and distributing assembly, on which the cage is progressively formed.

According to another embodiment, the supporting plane on which the cage is formed cooperates laterally with a plane to deposit, discharge and eventually complete the cage.

According to yet another embodiment, the reciprocal attachment means between the rods and the stirrups are movable with an alternate movement in association with every attachment cycle and are able to define the attachment interaxis of the stirrups.

According to one characteristic of the present invention, the stirrup positioning/translation and distributing assembly comprises a device according to the invention, consisting of at least three screw elements, or screw feeder, arranged in cooperation with at least a respective segment of the perimeter of the stirrups. By screw element, or screw feeder, we mean substantially a shaft on whose periphery there is at least a continuous or semi-continuous groove or ridge with a substantially helical development so as to define a thread.

The screw feeders are able to be made to selectively rotate to translate the stirrups, due to the interference with the relative threads, from a first loading position to at least a second attachment position where they are attached to the relative longitudinal rods.

These screw feeders, furthermore, perform a function of temporary accumulation of a plurality of the stirrups, which can be loaded to a desired number, possibly also sufficient for the formation of two, three or more cages. According to the invention, the screw feeders are associated with loading means, possibly automated, combined with a machine to produce stirrups.

According to another embodiment, the screw feeders are associated with counting means which detect the number of stirrups loaded and/or transported beyond a certain position, for example the beginning, the end or an intermediate position along the screw feeders themselves.

According to another variant, the screw feeders perform a packing function in one of their two end positions, front or rear, so that the stirrups are accumulated in a position where, if they do not have to be used immediately for the formation of the cage, can be amassed and tied. In this case, there is advantageously present a machine to automatically tie and/or discharge the packs of tied stirrups in correspondence with said end position of the screw feeders.

In a preferential embodiment of the invention, at least two of said screw feeders are arranged counter-positioned and advantageously, but not necessarily, substantially parallel to each other on a substantially horizontal plane, in order to support one or more stirrups in a substantially erect position between two consecutive threads and in cooperation with the supporting means.

According to the invention, at least one screw feeder is arranged underneath the relative stirrups and cooperates with one or more lateral guide and supporting elements in order to keep the stirrups in a substantially erect position and allow them to advance. In this embodiment, the screw feeder performs both the at least partial function of supporting means and also that of positioning and translation means for the stirrups.

According to the invention, one or more screw feeders arranged underneath the relative stirrups cooperate with one or more screw feeders associated with a segment of the lateral perimeter of the stirrups to support and translate relative stirrups.

In a first embodiment, the stirrups are loaded manually in a fixed and pre-ordained position. According to a variant, the stirrups are loaded by automatic means.

After they have been loaded, the stirrups are made to advance progressively by means of rotation of the screw feeders, until the stirrup located furthest forwards arrives in the attachment position. In this position the stirrup is attached, for example welded or tied, to one or more longitudinal rods by the afore-mentioned reciprocal attachment means.

The longitudinal rods can be definitive rods, that is, as laid down by the design specifications of the cage, or auxiliary rods used to form a semi-worked element, or precage, to be completed later in a different step and/or place and/or with different equipment. The longitudinal rods can be arranged, in known manner, all inside, or all outside, or partly inside and partly outside the perimeter of the stirrups; moreover, they can be placed on the lower or upper sides or corners of the stirrups, on in an intermediate position. The rods can cooperate with automatic positioning means which automatically arrange them in the correct welding or tying positions.

As already said, the interaxis between the stirrups can be defined by means of the selective drive of a welding assembly movable with alternate motion. According to a variant, the pitch of the stirrups is defined by the pitch of the screw feeder which determines the feed and the progressive positioning thereof in the attachment position.

In a first embodiment, the screw feeders are stationary in their position, whereas the cage that is progressively formed is translated, after every stirrup has been discharged, away from the screw feeders in order to create space for a new stirrup. In this case, the overall space occupied by the machine is equal to two times the length of the cage to be produced, since the lengths of the longitudinal rods and of the cage produced are added together.

According to a variant, it is the screw feeders that translate backwards, after every stirrup has been discharged, with respect to the direction of advance defined by their rotation. In other words, the screw feeders return back along the longitudinal rods discharging, on each occasion and with the interaxis pre-ordained and determined by the displacing means of the screw feeders, one stirrup into the welding position. This solution allows to reduce the overall bulk of the machine to the sole length of the cage to be produced. According to a variant of this solution, the welding assembly is mounted on board the screw feeders and the whole is mounted on a translating carriage commanded by a control unit in order to define on each occasion the correct positions in which to stop the screw feeders and discharge the stirrup.

According to another characteristic of the invention, the longitudinal rods are arranged on supporting means able to keep them raised with respect to the lower side of the stirrups arranged along the screw feeders in order to allow them to be inserted inside the perimeter of the stirrups.

In a first embodiment, the longitudinal rods can be fed into the perimeter of the stirrups manually. According to a variant, an at least partly automatic feed system is provided which uses rollers or other drawing means cooperating with supporting, guide and positioning means.

In a preferential embodiment, the screw feeders are associated with at least a support able to allow the relative lateral position thereof to be adjusted in order to vary the distance with respect to a mating screw feeder counter-positioned thereto. This allows the device to be adapted to the shape and size of the stirrups to be positioned and translated; it also allows the cage thus formed to be easily discharged, once the operation to attach the longitudinal rods has been completed. According to a variant, the screw feeders are associated with at least a support able to allow the adjustment of the respective vertical position thereof from the ground according to the shape and size of the cage to be formed.

According to another variant, the screw feeders are movable both laterally and vertically to adapt on each occasion to the size and shape of the stirrups and hence of the cage to be made.

### BRIEF DESCRIPTION OF THE DRAWINGS

These and other characteristics of the present invention will be apparent from the following description of some preferential forms of embodiment, given as a non-restrictive example with reference to the attached drawings wherein:
- fig. 1 shows schematically, with a view from above, a device to store, transport and distribute metal elements according to the invention in a first application;
- fig. 2 shows another application of the device in fig. 1;
- fig. 3 shows a partial perspective view of the cage-making machine according to the invention;
- figs. 4a-4d show the working cycle of a cage-making machine according to the invention in a first formulation;
- fig. 5 shows a view from above of fig. 4a;
- fig. 6 shows, on an enlarged scale, a detail of the zone for loading the stirrups of the machine in fig. 4a;
- figs. 7a-7d show the working cycle of a cage-making machine according to the invention in a second formulation.

### DETAILED DESCRIPTION OF SOME PREFERENTIAL FORMS OF EMBODIMENT OF THE INVENTION

With reference to the attached figures, the number 10 denotes a metal cage for reinforced concrete structures such as girders, pillars or foundations, comprising a plurality of stirrups 12, arranged distanced on respective substantially vertical planes according to a design interaxis, and a plurality of longitudinal rods 13 constrained to the stirrups 12 by means of welding and/or tying.

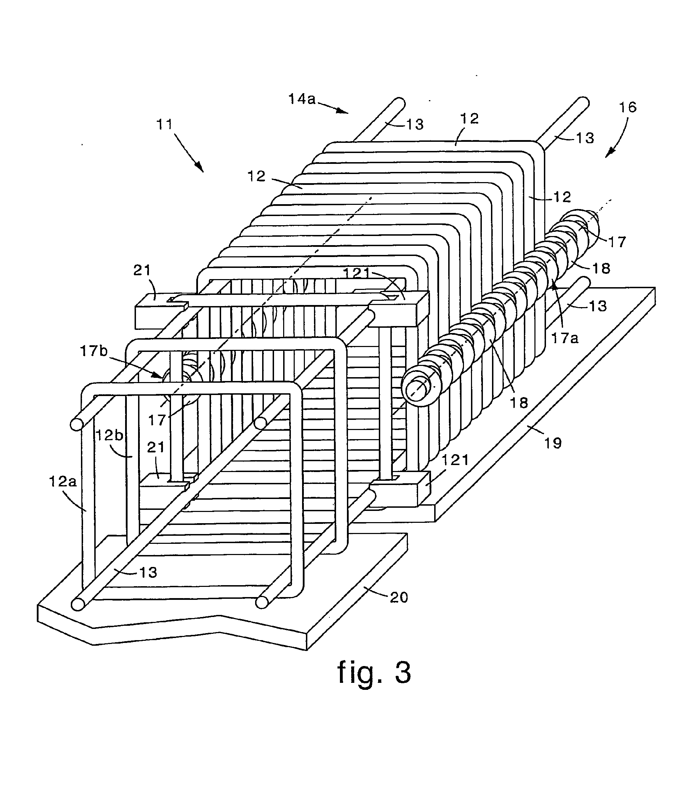

The cage 10 is assembled with the machine indicated in its entirety by the reference number 11 and shown schematically in figs. 3, 4a-4d and 7a-7d in some preferential embodiments.

The machine 11 comprises a stirrup 12 translation assembly 16 consisting of a plurality of screw elements, or screw feeders, 17 arranged in cooperation with at least a segment of the perimeter of the stirrups 12.

In the preferential embodiment shown, the translation assembly 16 comprises two screw feeders, respectively 17a and 17b, arranged facing and, in this case, substantially parallel to each other on a substantially horizontal plane, each one having relative helical grooves/ridges, or threads 18, cooperating with an erect side segment of the relative stirrups 12. The screw feeders 17a, 17b cooperate with supporting means to support the stirrups 12, consisting in this case of a lower plane 19. The plane 19 can be replaced by any another element with the same function, such as a belt, a grid, one or more bars etc.

Moreover at least one screw feeder (17c) is arranged below the feed plane of the stirrups and its threads 18 cooperate with a lower side segment of the relative stirrups 12.

According to a variant which is not shown here, at least one screw feeder 17 can be present in cooperation with at least part of the upper side of the stirrups 12.

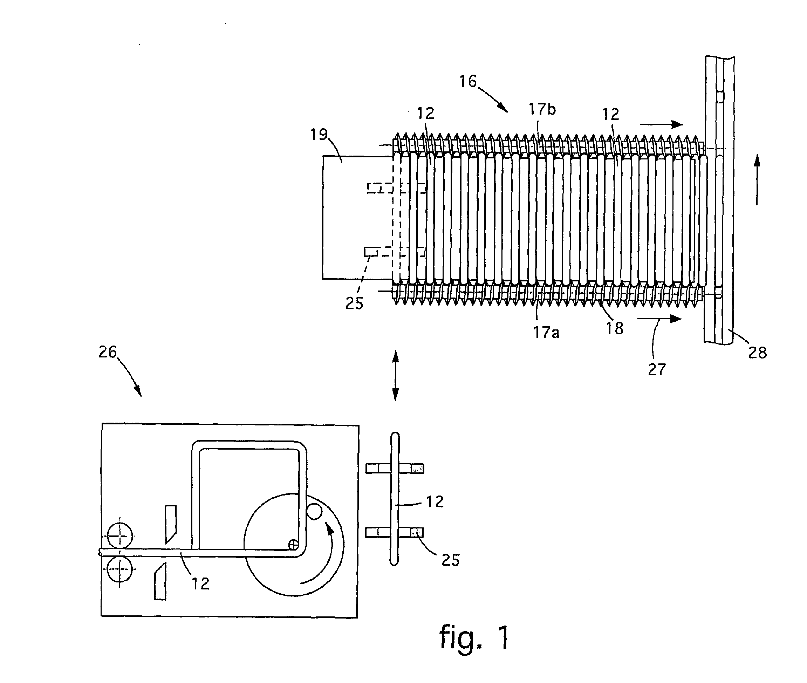

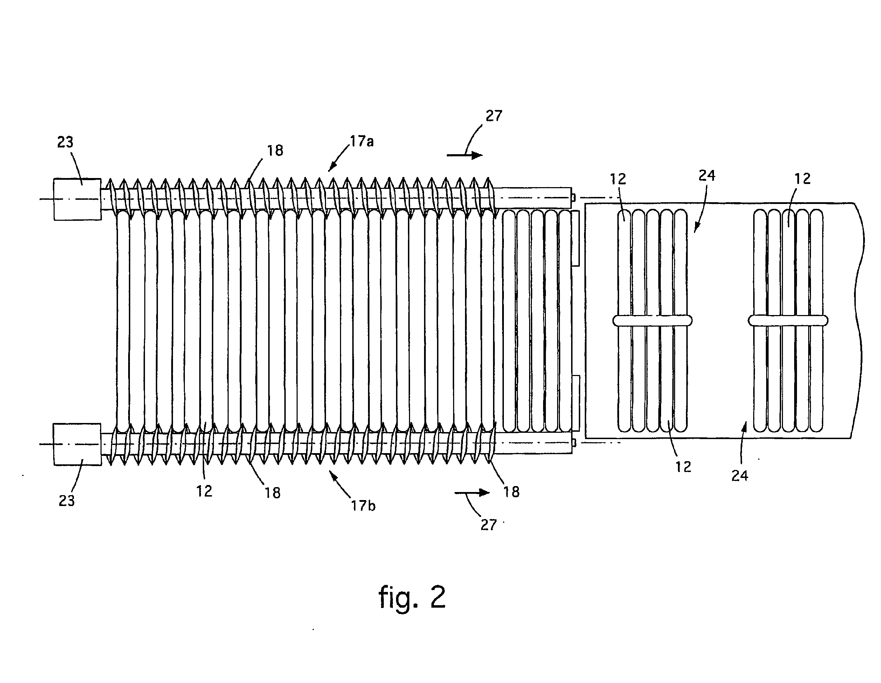

As shown in figs. 1 and 2, the screw feeders 17 can function as a temporary accumulation store for a plurality of stirrups 12. The stirrups 12 are arranged in an erect position, in order, suitably distanced from each other, and can be displaced in one direction 27, or in the opposite direction, from a production zone, for example represented by a stirrup-making machine 26, to the zone where they are used, consisting in this case of the zone where they are welded to the relative longitudinal rods 13 of the cage-making machine 11. Alternatively, the stirrups 12 can be unloaded onto a transporter 28 which sends them towards a zone where they are used.

The stirrups 12 can also be loaded from the stirrup-making machine 26 to the screw feeders 17 automatically, for example by means of an automatic handling device 25. According to a variant, the screw feeders 17 are arranged below the stirrup-making machine 26 and the stirrups 12 are loaded directly by falling. According to other solutions, there may be slides, inclined planes or other movement means which make possible to position the stirrups 12 produced by the stirrup-making machine 26 directly between the threads 18 of the screw feeders 17a, 17b.

Apart from being used for the specific formation of cages 11, a desired number of stirrups 12 can remain momentarily stored in the screw feeders 17 and possibly counted in order to form packs 24 of stirrups, to be used subsequently, each one having a desired number of stirrups 12 (fig. 2). For this reason, in cooperation with one and/or the other end of the screw feeders 17, a device may be present for the automatic tying of the stirrups 12, which forms the packs 24 and discharges them to a suitable discharge and storage zone.

To make the cage 10, the stirrups 12 are arranged, for example manually, in cooperation with the threads 18 of the screw feeders 17, for example in correspondence with a first loading position 14a. According to a variant, there is the automatic handling device 25 able to insert one or more stirrups 12 at a time between the threads 18 of the screw feeders 17.

In the embodiment shown in fig. 3, underneath the screw feeders 17a, 17b there is the supporting plane 19 which, together with the threads 18, serves to keep the stirrups 12 in an erect and substantially vertical position.

After inserting one or more stirrups 12 between the threads 18, the screw feeders 17 are selectively made to rotate, driving the relative motor 23; the rotation of the screw feeders 17 causes the stirrups 12 to advance in the longitudinal direction 27 and allows to insert, each time, one or more new stirrups 12 in correspondence with the loading position 14a.

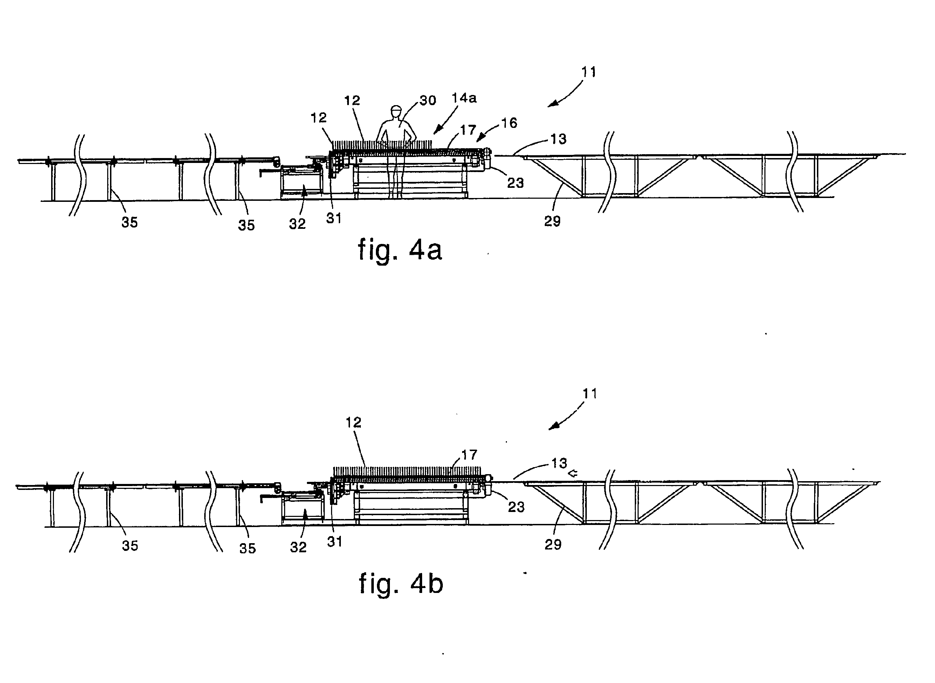

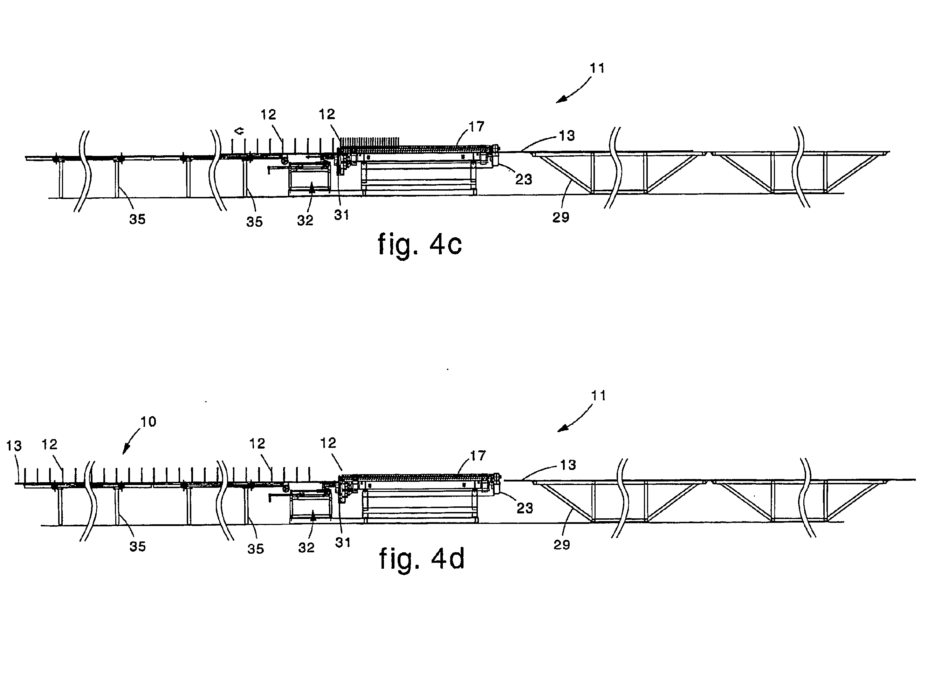

In the embodiment shown in figs. 4a-4d, the longitudinal rods 13 are arranged on a supporting plane 29 located upstream of the screw feeders 17, into which the stirrups 12 are inserted, in this case manually by an operator 30.

The supporting plane 29 functions as a store for the longitudinal rods 13, which may or may not be the design specification rods, and can serve to make a plurality of cages 11.

The operator 30 can position, between the threads 18 of the screw feeders 17, the stirrups 12 already separated by an interaxis "i" equal to the design interaxis of the cage 10 to be made. The correct position where the stirrups 12 are to be inserted can be marked, for example, by an acoustic and/or luminous signal which, according to the measurement of the distance covered, made by suitable measuring means, depending on the speed of rotation of the screw feeders 17, signals to the operator when the stirrups 12 are to be inserted. According to a first variant, an optical indicator detects when the last stirrup 12 inserted has reached a position corresponding to a distance equal to the interaxis "i" with respect to the loading position 14a, and signals to the operator by means of an acoustic and/or luminous signal that this position has been reached.

In another embodiment, the one shown in fig. 4a, the operator arranges the stirrups 12 in the screw feeders 17 without any constraints on the interaxis, and the interaxis is then determined by the movement of the cage 10 being formed after welding has started, as will be seen hereafter.

In another variant, the machine 11 comprises a fixed abutment indicator, located at a distance equal to "i" with respect to the loading position 14a; when the last stirrup 12 inserted reaches this indicator, the operator knows that it is time to insert a new stirrup 12 to ensure that the interaxis of the cage 10 according to design specifications is respected.

The stirrups 12 gradually inserted are progressively taken forwards by means of the rotation of the screw feeders 17 until they occupy substantially the whole length of the screw feeders 17.

Having reached this condition (fig. 4b), the stirrups 12 are already arranged in an erect position and distributed in the correct positions defined by the design specifications of the cage 10. At this point, the longitudinal rods 13 are inserted, either auxiliary or as laid down by the design specifications, inside or outside the perimeter of the stirrups 12, and attached to the stirrups 12, for example in correspondence of their inner corners, as shown in fig. 3.

Any known method can be used to insert the longitudinal rods 13, for example with an entirely manual procedure, or by means of automatic drawing devices with rollers associated with tubular guide elements, or by feed means with an alternate movement, for example with grippers or similar.

Advantageously, the longitudinal rods 13 are on a plane at least slightly elevated with respect to the lower side of the stirrups 12, so as to be able to be inserted inside their perimeter until they protrude in front of the stirrup 12 located farthest forwards in the screw feeders 17.

Any known method can also be used for the attachment operation, for example a completely manual operation of tying or welding, or an at least partly automated operation by means of at least partly movable welding elements or tying elements.

In this case, welding occurs in a single pre-determined position, immediately downstream of the screw feeders 17 with respect to the direction of feed. According to a variant which is not shown here, welding occurs at several points distributed along the length of the screw feeders 17.

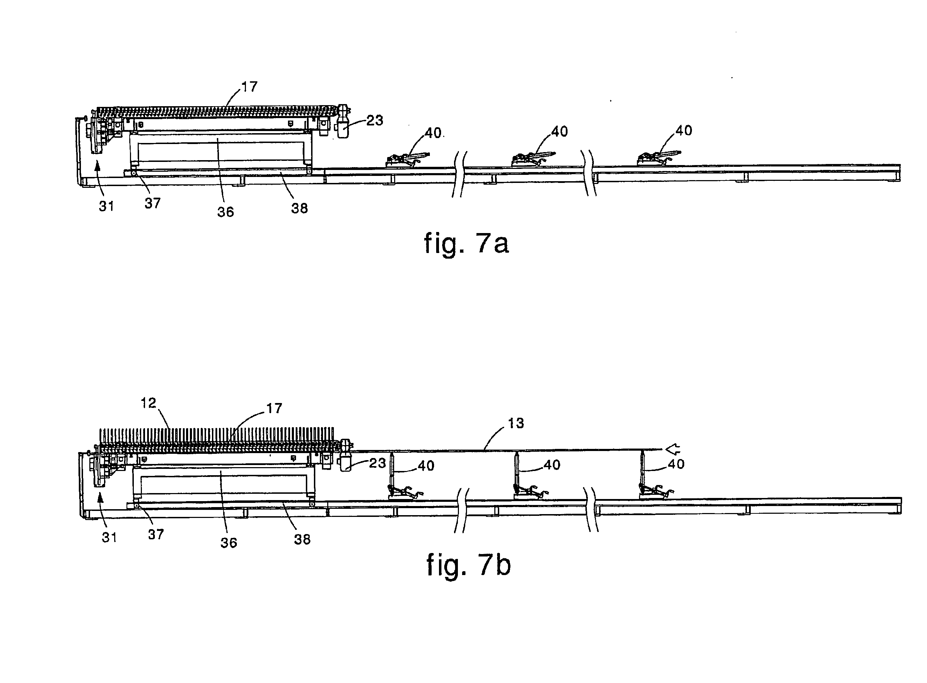

As they rotate, the screw feeders 17 discharge one stirrup 12 at a time into the welding position, then the welding assembly 31 is activated and welds the stirrup 12 to the relative longitudinal rods 13. When welding has been completed, a step-wise feeder mechanism 32, comprising in this case a jack 33 and a gripping lever 34 (fig. 6), moves the stirrup 12 and the rods 13 attached thereto forwards by one step, in order to free the welding position for a new stirrup 12.

The procedure is progressively repeated for all the stirrups 12 required by the design specifications of the cage 10, which, as it forms, rests on supporting elements 35 located downstream of the screw feeders 17.

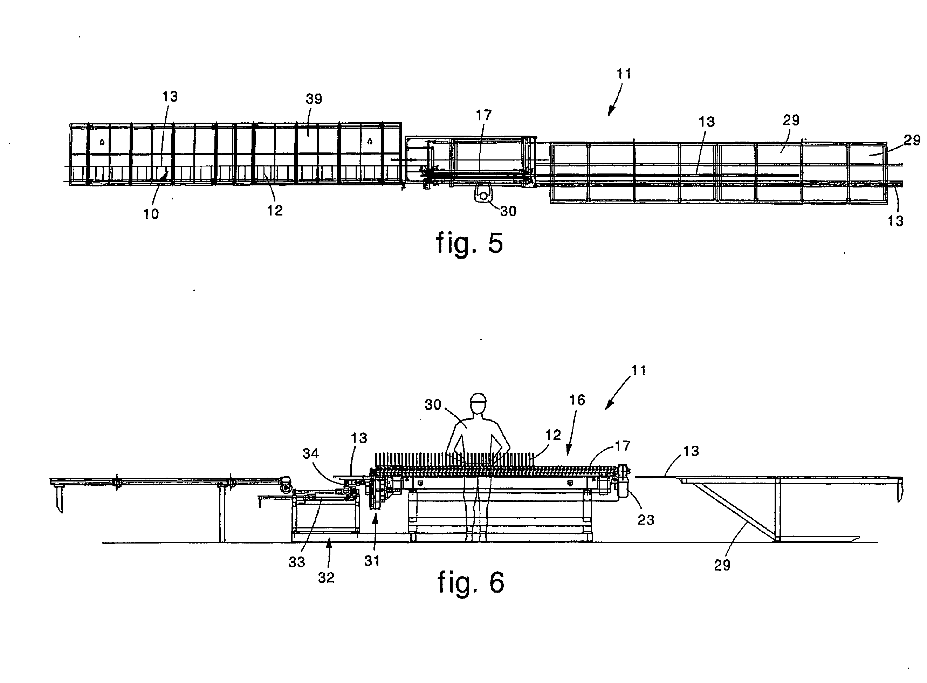

At the side of the supporting elements 35 there is a supporting plane 39 (fig. 5) on which the formed cage 10 can be translated and eventually completed and discharged, or first discharged and then eventually completed, while the machine is ready to make a subsequent cage.

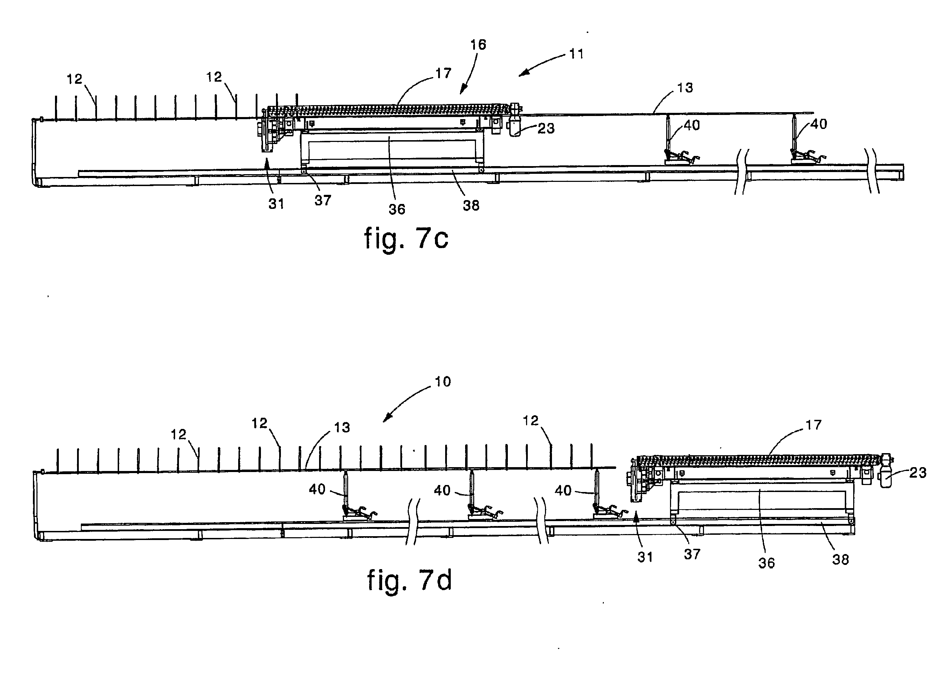

In the variant shown in figs. 7a-7d, the screw feeders 17 are mounted on a slider 36 equipped with wheels 37 that slide on tracks 38. Upstream of the screw feeders 17 there are selectively folding supporting means 40 which, when in the erect position, have the function of supporting the longitudinal rods 13 of the cage 10.

As can be seen in fig. 7b, the rods 13 are inserted inside the perimeter of the stirrups 12 until a front segment thereof protrudes from the stirrup 12 located farthest forward on the screw feeders 17. Then, as in the previous case, the rotation of the screw feeders 17 determines the unloading of the first stirrup 12 into the welding position, where the welding assembly 32 welds it to the longitudinal rods 13.

At this point, however, unlike the previous solution, the slider 36 is activated in order to move the screw feeders 17 backwards with respect to the longitudinal rods 13, for a distance on each occasion corresponding to the interaxis of the cage 10. This procedure is repeated for every stirrup 12 (fig. 7c), with the supporting elements 40 which are progressively lowered and are then raised, in order to allow the slider 36 and the screw feeders 17 to pass.

The cycle of discharging and welding the stirrups 12 is repeated for all the stirrups as laid down by the design specifications, until the cage 10 is completed, which remains resting on the supporting elements 40. The screw feeders 17 move to a position outside the space occupied by the cage 10, in order to facilitate the discharge thereof.

This solution allows to reduce the overall bulk in length of the machine 11 to a little more than the length of the cage 10.

According to the further variant shown in fig. 3, when the stirrup 12 has been discharged into a fixed position by the screw feeders 17, it is taken, in this case, by one or more, per side, of gripper elements 21, 121, with alternating movement, which move the stirrup 12a forwards for a distance equal to the interaxis "i" according to the design specifications.

The stirrup 12 welded to the rods 13 advances on a supporting plane 20 arranged downstream of the screw feeders 17.

Subsequently, the second stirrup 12b is welded to the rods 13 and the cycle of feed and subsequent repositioning of the gripper elements 21 is repeated, and so on for all the other stirrups 12 which are needed to form the cage 10.

Thanks to this solution, the stirrups 12 can be loaded between the screw feeders 17 in any reciprocal position whatsoever, and it is then the gripper elements 21 which determine the interaxis "i" according to the design specifications.

The stirrups 12 loaded between the screw feeders 17 can also be used to form two or more different cages 10, or pre-cages. In this case too, the longitudinal rods 13 can be fed in any known method, for example by means of thrust rollers (not shown here) associated with guide tubes, manually or in any other known manner.

According to a first variant, the welding elements and the gripper elements 21, 121 are integrated in a single mobile device with alternating motion. According to another variant, the welding elements are fixed in correspondence with the position 14a, and the stirrups 12, after they have been welded to the relative rods 13, are drawn forwards on the supporting plane 20 by means of a drawing element arranged downstream.

With the invention it is therefore possible to achieve a variety of cages, or pre-cages, 10 with constructional characteristics which differ in type, shape and size of the stirrups 12, in position and number of longitudinal rods 13 employed. This is because the feed system which uses the screw feeders 17 does not need any adaptation or reconfiguring as the shape and size of the stirrups 12 vary, and is in no way influenced by the number and position, according to the design specifications, of the longitudinal rods 13 to be associated with the stirrups 12.

This feed system with screw feeders 17, as we have seen, allows to form very capacious stores for stirrups 12 and, at the same time, gives a great flexibility in the design both in terms of interaxis and also in terms of the width/height of the cage 10, simply by arranging the screw feeders 17 on laterally and/or vertically mobile supporting means.

Modifications and/or additions can be made to the method and machine 11 as described heretofore, without departing from the field and scope of the present invention, as defined in the appended claims.

## Claims

1. Method to make metal reinforcement cages (10) for bearing structures made of reinforced concrete, said cages (10) comprising a plurality of longitudinal rods (13) associated with a plurality of stirrups (12) arranged at intervals along the same, the method providing the steps of:
- positioning said stirrups (12) in cooperation with a stirrup positioning/translation and distributing assembly (16) able to keep said stirrups (12) substantially erect and parallel to each other;
- translating all the stirrups (12) forwards in order to take at least a first stirrup (12a) into correspondence with at least one attachment position;
- translating all the stirrups (12) forwards in order to progressively take all the stirrups (12) into correspondence with said at least one attachment position;
- positioning said longitudinal rods (13) and attaching them to said stirrups (12),
**characterized in that** the translation of said stirrups (12) is performed using at least three screw elements, or screw feeders, (17) each one associated to a respective segment of the perimeter of the stirrups (12), at least one of the screw elements (17) being associated to a lower side segment of the stirrups (12), and at least two of the screw elements (17) being each one arranged in cooperation with an erect side segment of the stirrups (12), said three screw elements (17) having the respective helical grooves/ridges, or threads (18), engaging with a segment of the outer perimeter of the relative stirrups (12) in order to achieve a translation movement at least from a first loading position (14a) for the stirrups (12) to at least a second attachment position maintaining the stirrups in a substantially erect position.

2. Method as in claim 1, **characterized in that** the stirrups (12) are inserted from above between the threads (18) of the two lateral screw elements (17) and made to rest on the third screw element in order to keep the stirrups (12) in an erect and substantially vertical position.

3. Method as in claim 1, **characterized in that** it provides to use at least one screw feeder (17) cooperating with an upper side segment of the stirrups (12).

4. Method as in claim 1, **characterized in that** the stirrups (12) are positioned in correspondence with said at least three screw elements, or screw feeders, (17) according to the interaxis ("i") defined by the design specifications of the cage (10).

5. Method as in claim 4, **characterized in that** acoustic and/or visual signaling means are activated, when the last stirrup (12) inserted has reached a position at a distance from said loading position (14a) corresponding to the value of said interaxis ("i"), in order to warn the operator to insert a new stirrup (12) between said screw feeders (17).

6. Method as in claim 1, **characterized in that** the stirrups (12) are positioned in correspondence with said at least three screw elements, or screw feeders, (17) according to any reciprocal distance whatsoever, the interaxis ("i") defined by the design specifications of the cage (10) being then established by separator/feed means (21, 121) arranged downstream of said screw feeders (17).

7. Method as in claim 1, **characterized in that** said cage being formed is displaced away from said lateral screw feeders (17), for every welding cycle between the stirrups (12) and longitudinal rods (13), by step-wise feed means (32) defining the interaxis of the cage (10).

8. Method as in claim 1, **characterized in that** said lateral screw feeders (17) are displaced away from the welding position by slider means (36) defining the interaxis of the cage (10).

9. Method as in any claim from 1 to 8 inclusive, **characterized in that** said stirrups (12) are loaded automatically onto said lateral screw feeders (17) by handling means (25) in correspondence with said loading position (14a).

10. Method as in any claim from 1 to 9 inclusive, **characterized in that** said longitudinal rods (13) are positioned and attached inside the perimeter of said stirrups (12).

11. Method as in any claim from 1 to 10 inclusive, **characterized in that** said longitudinal rods (13) are positioned and attached outside the perimeter of said stirrups (12).

12. Method as in any claim from 1 to 11 inclusive, **characterized in that** it provides at least a step of counting said stirrups (12) advancing on said screw feeders (17).

13. Method as in any claim from 1 to 12 inclusive, **characterized in that** it provides at least a step of packing and/or tying so as to form packs (24) of stirrups (12) advancing on said screw feeders (17).

14. Machine to make metal reinforcement cages (10) employed for bearing structures made of reinforced concrete, said cages (10) comprising a plurality of longitudinal rods (13) associated with a plurality of stirrups (12) arranged at intervals along the same, the machine comprising at least a stirrup positioning/translation and distributing assembly (16) and attachment means to reciprocally attach said longitudinal rods (13) to said stirrups (12), **characterized in that** said stirrup positioning/translation and distributing assembly (16) comprises at least three screw elements, or screw feeders, (17) each one arranged to be cooperable with a segment of the outer perimeter of said stirrups (12), at least one of the screw elements (17) being associable to a lower side segment of the stirrups (12), and at least two of the screw elements (17) being each one arranged to be cooperable with an erect side segment of the stirrups (12), said three screw elements, or screw feeders, (17) being able to be selectively made to rotate to translate said stirrups (12), maintained in a substantially erect position, due to the interference with the relative helical grooves/ridges, or threads (18) at least from a first loading position (14a) to at least a second attachment position wherein said stirrups (12) are attached to the relative longitudinal rods (13), means (21, 121; 32, 36) to define the interaxis ("i") of the cage (10) being provided in cooperation with said screw feeders (17).

15. Machine as in claim 14, **characterized in that** it comprises at least one screw feeder (17) cooperating with an upper side segment of the stirups (12).

16. Machine as in claim 14, **characterized in that** said means to define the interaxis ("i") of the cage (10) comprise a step-wise feed mechanism (32) able to displace the cage (10) being formed forwards with respect to said attachment position, for a quantity corresponding to the interaxis ("i"), in coordination with every cycle to discharge a stirrup (12) by said screw feeders (17).

17. Machine as in claim 14, **characterized in that** said means to define the interaxis ("i") of the cage (10) comprise slider means (36) able to displace said screw feeders (17) backwards with respect to said attachment position, for a quantity corresponding to the interaxis ("i"), in coordination with every cycle to discharge a stirrup (12) by said screw feeders (17).

18. Machine as in claim 17, **characterized in that** said longitudinal rods (13) are arranged upstream of said screw feeders (17) on supporting means (40) and that said supporting means (40) are able to fold down in order to free the interference to the backwards movement of said screw feeders (17) with the relative stirrups (12).

19. Machine as in claim 14, **characterized in that** said means to define the interaxis ("i") of the cage (10) comprise feeding means with alternating movement (21, 121) arranged in cooperation with said attachment means present in said attachment position.

20. Machine as in claim 19, **characterized in that** said feeding means with alternating movement (21, 121) incorporate welding means.

21. Machine as in any claim from 14 to 20 inclusive, **characterized in that** said longitudinal rods (13) are supported by means (29, 40) defining a more elevated supporting plane with respect to the lower side of the stirrups (12) arranged in the relative screw feeders (17).

22. Machine as in any claim from 14 to 21 inclusive, **characterized in that** it comprises signaling means able to signal when the last stirrup inserted between said screw feeders (17) has reached a position at a distance from said loading position (14a) corresponding to the value of the interaxis ("i") according to the design specifications of the cage (10).

23. Machine as in claim 22, **characterized in that** said signaling means comprise visual means.

24. Machine as in claim 22, **characterized in that** said signaling means comprise means to measure the distance covered in relation to the speed of rotation of said screw feeders (17).

25. Machine as in any claim from 14 to 24 inclusive, **characterized in that** it comprises guide means able to allow a plurality of longitudinal rods (13) to be inserted inside the perimeter of the stirrups (12) arranged in an erect position on the relative screw feeders (17).

26. Machine as in any claim from 14 to 25 inclusive, **characterized in that** one of said lateral screw feeders (17) is associated with a support able to allow at least to adjust the relative lateral position thereof in order to vary the distance with respect to a mating lateral screw feeder (17) in counter-position thereto according to the shape and size of the stirrups (12) to be positioned/translated.

27. Machine as in any claim from 14 to 26 inclusive, **characterized in that** said at least one screw feeder (17) associated to said lower side segment of the stirrups (12) is associated with a support able to allow at least to adjust the respective vertical position thereof with respect to the ground.

28. Machine as in any claim from 14 to 27 inclusive, **characterized in that** it comprises means (25) able to load said stirrups (12) automatically onto said screw feeders (17) in correspondence with said loading position (14a).

## Patentansprüche

1. Verfahren zum Herstellen von Metallbewehrungskäfigen (10) für Tragkonstruktionen aus Stahlbeton, wobei diese Käfige (10) über mehrere Längsstäbe (13) verfügen, entlang denen mehrere Rahmenbügel (12) mit Intervallen angeordnet sind, mit den folgenden Schritten:
- Positionieren der Rahmenbügel (12) in Zusammenwirkung mit einer Rahmenbügel-Positionier/Verschiebe- und Verteilanordnung (16), die sie im Wesentlichen aufrecht und parallel zueinander halten kann;
- Verschieben aller Rahmenbügel (12) nach vorne, um mindestens einen ersten Rahmenbügel (12) in Entsprechung mit mindestens einer Befestigungsposition zu bringen;
- Verschieben aller Rahmenbügel (12) nach vorne, um fortschreitend alle derselben in Entsprechung zur mindestens einen Befestigungsposition zu bringen;
- Positionieren der Längsstäbe (13) und Befestigen derselben an den Rahmenbügeln (12);
**dadurch gekennzeichnet, dass** die Verschiebung der Rahmenbügel (12) unter Verwendung mindestens dreier Schraubenelemente, oder Schraubenförderer, (17) erfolgt, von denen jedes einem jeweiligen Segment des Umfangs der Rahmenbügel (12) zugeordnet ist, wobei mindestens eines der Schraubenelemente (17) einem unteren Seitensegment der Rahmenbügel (12) zugeordnet ist und mindestens zwei der Schraubenelemente (17) jeweils einzeln in Zusammenwirkung mit einem aufrechten Seitensegment der Rahmenbügel (12) angeordnet sind, wobei diese drei Schraubenelemente (17) über jeweilige schraubenförmige Gräben/Kämme, oder Gewinde (18), verfügen, die mit einem Segment des Außenumfangs der jeweiligen Rahmenbügel (12) in Eingriff stehen, um eine Verschiebebewegung zumindest von einer ersten Ladeposition (14a) für die Rahmenbügel (12) an mindestens eine zweite Befestigungsposition zu erzielen, wobei die Rahmenbügel in im Wesentlichen aufrechter Position gehalten werden.

2. Verfahren nach Anspruch 1, **dadurch gekennzeichnet, dass** die Rahmenbügel (12) von oben her zwischen die Gewinde (18) der zwei seitlichen Schraubenelemente (17) eingesetzt werden und dafür gesorgt wird, dass sie auf dem dritten Schraubenelement ruhen, um sie in einer aufrechten und im Wesentlichen senkrechten Position zu halten.

3. Verfahren nach Anspruch 1, **dadurch gekennzeichnet, dass** es so beschaffen ist, dass mindestens ein Schraubenförderer (17) zu verwenden ist, der mit einem oberen Seitensegment der Rahmenbügel (12) zusammen wirkt.

4. Verfahren nach Anspruch 1, **dadurch gekennzeichnet, dass** die Rahmenbügel (12) entsprechend den mindestens drei Schraubenelementen, oder Schraubenförderern, entsprechend dem durch die Designspezifikationen des Korbs (10) definierten Interachsenabstand ("i").

5. Verfahren nach Anspruch 4, **dadurch gekennzeichnet, dass** eine akustische und/oder visuelle Signalisiereinrichtung aktiviert wird, wenn der letzte eingesetzte Rahmenbügel (12) eine Position erreicht hat, die um einen Abstand von der Ladeposition (14a) entfernt ist, der dem Wert des Interachsenabstands ("i") entspricht, um den Bediener darüber zu warnen, einen neuen Rahmenbügel (12) zwischen die Schraubenförderer (17) einzusetzen.

6. verfahren nach Anspruch 1, **dadurch gekennzeichnet, dass** die Rahmenbügel (12) entsprechend den mindestens drei Schraubenelementen, oder Schraubenförderern, (17) entsprechend irgendeinem Hin-Her-Abstand positioniert werden, wobei der durch die Designspezifikation des Korbs (10) definierte Interachsenabstand ("i") dann durch eine Trenn/Vorschub-Einrichtung (21, 121), die stromabwärts in Bezug auf die Schraubenförderer (17) angeordnet ist, eingestellt wird.

7. Verfahren nach Anspruch 1, **dadurch gekennzeichnet, dass** der gerade hergestellte Korb für jeden Schweißzyklus zwischen den Rahmenbügeln (12) und den Längsstäben (13) durch eine Schrittvorschubeinrichtung (32), die den Interachsenabstand des Korbs (10) bestimmt, von den seitlichen Schraubenförderern (17) weggeschoben wird.

8. Verfahren nach Anspruch 1, **dadurch gekennzeichnet, dass** die seitlichen Schraubenförderer (17) durch eine Schlitteneinrichtung (36), die den Interachsenabstand des Korbs (10) bestimmt, von der Schweißposition weggeschoben werden.

9. Verfahren nach einem der Ansprüche 1 bis 8 einschließlich, **dadurch gekennzeichnet, dass** die Rahmenbügel (12) durch eine Handlingeinrichtung (25) automatisch entsprechend der Ladeposition (14a) auf die seitlichen Schraubenförderer (17) geladen werden.

10. Verfahren nach einem der Ansprüche 1 bis 9 einschließlich, **dadurch gekennzeichnet, dass** die Längsstäbe (13) innerhalb des Umfangs der Rahmenbügel (12) positioniert und befestigt werden.

11. Verfahren nach einem der Ansprüche 1 bis 10 einschließlich, **dadurch gekennzeichnet, dass** die Längsstäbe (13) außerhalb des Umfangs der Rahmenbügel (12) positioniert und befestigt werden.

12. Verfahren nach einem der Ansprüche 1 bis 11 einschließlich, **dadurch gekennzeichnet, dass** es über mindestens einen Schritt verfügt, gemäß dem die auf den Schraubenförderern (17) vorwärts bewegten Rahmenbügel (12) gezählt werden.

13. Verfahren nach einem der Ansprüche 1 bis 12 einschließlich, **dadurch gekennzeichnet, dass** es über mindestens einen Schritt verfügt, gemäß dem ein Packetieren und/oder Verzurren in solcher Weise erfolgt, dass Packen (24) von Rahmenbügeln (12) gebildet werden, die auf den Schraubenförderern (17) vorwärts bewegt werden.

14. Maschine zum Herstellen von Metallbewehrungskäfigen (10) für Tragkonstruktionen aus Stahlbeton, wobei diese Käfige (10) über mehrere Längsstäbe (13) verfügen, entlang denen mehrere Rahmenbügel (12) mit Intervallen angeordnet sind, mit mindestens einer Rahmenbügel-Positionier/Verschiebe- und Verteilanordnung (16) sowie einer Befestigungseinrichtung zum Befestigen der Längsstäbe (13) durch eine Hin-Her-Bewegung an den Rahmenbügeln (12); **dadurch gekennzeichnet, dass** die Rahmenbügel-Positionier/Verschiebe- und Verteilanordnung (16) über mindestens drei Schraubenelemente, oder Schraubenförderer, (17) verfügt, von denen jedes so angeordnet ist, dass es mit einem Segment des Außenumfangs der Rahmenbügel (12) zusammenwirken kann, wobei mindestens eines der Schraubenelemente (17) einem Segment an der Unterseite der Rahmenbügel (12) zuordenbar ist und mindestens zwei der Schraubenelemente (17) jeweils so angeordnet sind, dass sie mit einem aufrechten Seitensegment der Rahmenbügel (12) zusammenwirken können, wobei die drei Schraubenelemente, oder Schraubenförderer, (17) selektiv gedreht werden können, um die Rahmenbügel (12), die in einer im Wesentlichen aufrechten Stellung gehalten werden, aufgrund einer Wechselwirkung mit zugehörigen schraubenförmigen Gräben/Kämmen, oder Gewinden (18) von mindestens einer ersten Ladeposition (14a) in mindestens eine zweite Befestigungsposition, in der die Rahmenbügel (12) an den zugehörigen Längsstäben (13) befestigt werden, zu verschieben, wobei in Zusammenwirkung mit den Schraubenförderern (17) eine Einrichtung (21, 121; 32, 36) zum Definieren des Interachsenabstands ("i") des Korbs (10) vorhanden ist.

15. Maschine nach Anspruch 14, **dadurch gekennzeichnet, dass** sie über mindestens einen Schraubenförderer (17) verfügt, der mit einem Segment an der Oberseite der Rahmenbügel (12) zusammenwirkt.

16. Maschine nach Anspruch 14, **dadurch gekennzeichnet, dass** die Einrichtung zum Bestimmend es Interachsenabstands ("i") des Korbs (10) über einen Schrittvorschubmechanismus (32) verfügt, der den gerade hergestellten Korb (10) in Bezug auf die Befestigungsposition um einen Wert, der dem Interachsenabstand ("i") entspricht, in Koordination mit jedem Zyklus vorwärts schieben kann, um einen Rahmenbügel (12) durch die Schraubenförderer (17) auszugeben.

17. Maschine nach Anspruch 14, **dadurch gekennzeichnet, dass** die Einrichtung zum Bestimmen des Interachsenabstands ("i") des Korbs (10) über eine Schlitteneinrichtung (36) verfügt, die die Schraubenförderer (17) in Bezug auf die Befestigungsposition um einen Wert, der dem Interachsenabstand ("i") entspricht, in Koordination mit jedem Zyklus rückwärts verschieben kann, um einen Rahmenbügel (12) durch die Schraubenförderer (17) auszugeben.

18. Maschine nach Anspruch 17, **dadurch gekennzeichnet, dass** die Längsstäbe (13) stromaufwärts in Bezug auf die Schraubenförderer (17) auf einer Trägereinrichtung (40) angeordnet werden und diese nach unten geklappt werden kann, um bei der Rückwärtsbewegung der Schraubenförderer (17) eine Wechselwirkung mit den jeweiligen Rahmenbügeln (12) zu verhindern.

19. Maschine nach Anspruch 14, **dadurch gekennzeichnet, dass** die Einrichtung zum Bestimmen des Interachsenabstands ("i") des Korbs (10) über eine Vorschubeinrichtung mit alternierender Bewegung (21, 121) verfügt, die in Zusammenwirkung mit der an der Befestigungsposition vorhandenen Befestigungseinrichtung angeordnet ist.

20. Maschine nach Anspruch 19, **dadurch gekennzeichnet, dass** die Vorschubeinrichtung mit alternierender Bewegung (21, 121) über eine Schweißeinrichtung verfügt.

21. Maschine nach einem der Ansprüche 14 bis 20 einschließlich, **dadurch gekennzeichnet, dass** die Längsstäbe (13) durch eine Einrichtung (29, 40) gehalten werden, die eine erhöhte Halteebene in Bezug auf die Unterseite der in den zugehörigen Schraubenförderern (17) angeordneten Rahmenbügel (12) bildet.

22. Maschine nach einem der Ansprüche 14 bis 21 einschließlich, **dadurch gekennzeichnet, dass** sie über eine Signalisiereinrichtung verfügt, die dann ein Signal geben kann, wenn der letzte Rahmenbügel, der zwischen die Schraubenförderer (17) eingesetzt ist, eine Position erreicht hat, die um einen Abstand entfernt von der Ladeposition (14a) liegt, die dem Wert des Interachsenabstands ("i") entsprechend den Designspezifikationen des Korbs (10) entspricht.

23. Maschine nach Anspruch 22, **dadurch gekennzeichnet, dass** die Signalisiereinrichtung über eine visuelle Einrichtung verfügt.

24. Maschine nach Anspruch 22, **dadurch gekennzeichnet, dass** die Signalisiereinrichtung über eine Einrichtung zum Messen des zurückgelegten Wegs in Beziehung zur Drehzahl der Schraubenförderer (17) aufweist.

25. Maschine nach einem der Ansprüche 14 bis 24 einschließlich, **dadurch gekennzeichnet, dass** sie über eine Führungseinrichtung verfügt, die es ermöglicht, mehrere Längsstäbe (13) in den Umfang der Rahmenbügel (12) einzufügen, die in aufrechter Position auf den jeweiligen Schraubenförderern (17) angeordnet sind.

26. Maschine nach einem der Ansprüche 14 bis 25 einschließlich, **dadurch gekennzeichnet, dass** einem der seitlichen Schraubenförderer (17) eine Halterung zugeordnet ist, die es ermöglicht, zumindest die zugehörige seitliche Relativposition einzustellen, um den Abstand in Bezug auf einen zugehörigen seitlichen Schraubenförderer (17) in zugehöriger Gegenposition entsprechend der Form und der Größe der zu positionierenden/zu verschiebenden Rahmenbügel (12) einzustellen.

27. Maschine nach einem der Ansprüche 14 bis 26 einschließlich, **dadurch gekennzeichnet, dass** dem mindestens einen Schraubenförderer (17), der dem Segment an der Unterseite der Rahmenbügel (12) zugeordnet ist, eine Halterung zugeordnet ist, die es ermöglicht, zumindest die zugehörige jeweilige Vertikalposition in Bezug auf den Boden einzustellen.

28. Maschine nach einem der Ansprüche 14 bis 27 einschließlich, **dadurch gekennzeichnet, dass** sie über eine Einrichtung (25) verfügt, die die Rahmenbügel (12) entsprechend der Ladeposition (14a) automatisch auf die Schraubenförderer (17) laden kann.

## Revendications

1. Procédé de fabrication de cages métalliques d'armature (10) pour des structures porteuses en béton armé, lesdites cages (10) comprenant une pluralité de barres longitudinales (13) associées à une pluralité d'étriers (12) disposés à intervalles le long de celles-ci, le procédé prévoyant les étapes de :
- positionnement desdits étriers (12) en coopération avec une structure (16) de positionnement/translation et de distribution d'étriers, apte à maintenir lesdits étriers (12) sensiblement dressés et parallèles entre eux ;
- translation de tous les étriers (12) vers l'avant afin d'amener au moins un premier étrier (12a) en correspondance avec au moins une position de fixation;
- translation de tous les étriers (12) vers l'avant afin d'amener progressivement tous les étriers (12) en correspondance avec au moins une position de fixation;
- positionnement desdites barres longitudinales (13) et fixation de celles-ci auxdits étriers (12) ;
**caractérisé en ce que** la translation desdits étriers s'effectue à l'aide d'au moins trois éléments à vis ou distributeurs à vis (17), chacun étant associé à un segment respectif du périmètre des étriers (12), l'un au moins des éléments à vis (17) étant associé à un segment du côté inférieur des étriers (12), et deux au moins des éléments à vis (17) étant disposés chacun en coopération avec un segment latéral dressé des étriers (12), les gorges/nervures hélicoïdales respectives, ou filets (18), desdits trois éléments à vis (17) s'engageant dans un segment du périmètre externe des étriers associés (12) afin de réaliser un mouvement de translation depuis au moins une première position de chargement (14a) des étriers (12) jusqu'à au moins une seconde position de fixation, en maintenant les étriers en position sensiblement dressée.

2. Procédé selon la revendication 1, **caractérisé en ce que** les étriers (12) sont insérés par le dessus entre les filets (18) des deux éléments à vis latéraux (17) et posés sur le troisième élément à vis afin de conserver les étriers (12) en position dressée et sensiblement verticale.

3. Procédé selon la revendication 1, **caractérisé en ce qu'**il prévoit d'utiliser au moins un distributeur à vis (17) coopérant avec un segment du côté supérieur des étriers (12).

4. Procédé selon la revendication 1, **caractérisé en ce que** les étriers (12) sont positionnés en correspondance avec lesdits au moins trois éléments à vis, ou distributeurs à vis (17), selon l'entraxe ("i") défini par les cotes d'origine de la cage (10).

5. Procédé selon la revendication 4, **caractérisé en ce que** des moyens de signalisation acoustiques et/ou visuels sont activés lorsque le dernier étrier (12) inséré a atteint une position située à une distance de ladite position de chargement (14a) correspondant à la valeur dudit entraxe ("i"), afin d'avertir l'opérateur d'insérer un nouvel étrier (12) entre lesdits distributeurs à vis (17).

6. Procédé selon la revendication 1, **caractérisé en ce que** les étriers (12) sont positionnés en correspondance avec lesdits au moins trois éléments à vis, ou distributeurs à vis (17), à une distance d'écart quelconque, l'entraxe ("i") défini par les cotes d'origine de la cage (10) étant alors fixé par des moyens séparateurs/distributeurs (21, 121) installés en aval desdits distributeurs à vis (17).

7. Procédé selon la revendication 1, **caractérisé en ce que** ladite cage, une fois formée, est éloignée desdits distributeurs à vis latéraux (17), pour chacun des cycles de soudage entre les étriers (12) et les barres longitudinales (13), par des moyens distributeurs pas à pas (32) définissant l'entraxe de la cage (10).

8. Procédé selon la revendication 1, **caractérisé en ce que** lesdits distributeurs à vis latéraux (17) sont éloignés de la position de soudage par des moyens coulissants (36) définissant l'entraxe de la cage (10).

9. Procédé selon l'une quelconque des revendications 1 à 8 incluse, **caractérisé en ce que** lesdits étriers (12) sont chargés automatiquement sur lesdits distributeurs à vis latéraux (17) par des moyens de manutention (25) en correspondance avec ladite position de chargement (14a).

10. Procédé selon l'une quelconque des revendications 1 à 9 incluse, **caractérisé en ce que** lesdites barres longitudinales (13) sont positionnées et fixées à l'intérieur du périmètre desdits étriers (12).

11. Procédé selon l'une quelconque des revendications 1 à 10 incluse, **caractérisé en ce que** lesdites barres longitudinales (13) sont positionnées et fixées à l'extérieur du périmètre desdits étriers (12).

12. Procédé selon l'une quelconque des revendications 1 à 11 incluse, **caractérisé en ce qu'**il prévoit au moins une étape de comptage desdits étriers (12) en train d'avancer sur lesdits distributeurs à vis (17).

13. Procédé selon l'une quelconque des revendications 1 à 12 incluse, **caractérisé en ce qu'**il prévoit au moins une étape de regroupement et/ou d'attache de manière à former des paquets (24) d'étriers (12) en train d'avancer sur lesdits distributeurs à vis (17).

14. Machine de fabrication de cages métalliques d'armature (10) employées pour des structures porteuses en béton armé, lesdites cages (10) comprenant une pluralité de barres longitudinales (13) associées à une pluralité d'étriers (12) disposés à intervalles le long de celles-ci, la machine comprenant au moins une structure (16) de positionnement/translation et de distribution d'étriers, et des moyens de fixation destinés à fixer lesdites barres longitudinales (13) auxdits étriers (12),
**caractérisée en ce que** ladite structure (16) de positionnement/translation et de distribution d'étriers comprend au moins trois éléments à vis ou distributeurs à vis (17), chacun étant disposé pour pouvoir coopérer avec un segment du périmètre externe desdits étriers (12), l'un au moins des éléments à vis (17) pouvant être associé à un segment du côté inférieur des étriers (12), et deux au moins des éléments à vis (17) étant disposés pour pouvoir coopérer avec un segment latéral dressé des étriers (12), lesdits trois éléments à vis ou distributeurs à vis (17) pouvant être mis sélectivement en rotation pour déplacer en translation lesdits étriers (12), maintenus en position sensiblement dressée, sous l'action des gorges/nervures hélicoïdales associées, ou filets (18), depuis au moins une première position de chargement (14a) jusqu'à au moins une seconde position de fixation, dans laquelle lesdits étriers (12) sont fixés aux barres longitudinales associées (13), des moyens (21, 121 ; 32, 36) de définition de l'entraxe ("i") de la cage (10) étant prévus en coopération avec lesdits distributeurs à vis (17).

15. Machine selon la revendication 14, **caractérisée en ce qu'**elle comprend au moins un distributeur à vis (17) coopérant avec un segment du côté supérieur des étriers (12).

16. Machine selon la revendication 14, **caractérisée en ce que** lesdits moyens de définition de l'entraxe ("i") de la cage (10) comprennent un mécanisme de distribution pas-à-pas (32) apte à déplacer la cage (10) formée vers l'avant, par rapport à ladite position de fixation, d'une distance correspondant à l'entraxe ("i"), en coordination avec chaque cycle de déchargement d'un étrier (12) par lesdits distributeurs à vis (17).

17. Machine selon la revendication 14, **caractérisée en ce que** lesdits moyens de définition de l'entraxe ("i") de la cage (10) comprennent des moyens coulissants (36) aptes à déplacer lesdits distributeurs à vis (17) vers l'arrière par rapport à ladite position de fixation, d'une distance correspondant à l'entraxe ("i"), en coordination avec chaque cycle de déchargement d'un étrier (12) par lesdits distributeurs à vis (17).

18. Machine selon la revendication 17, **caractérisée en ce que** lesdites barres longitudinales (13) sont disposées en amont desdits distributeurs à vis (17) sur des moyens de support (40) et **en ce que** lesdits moyens de support (40) sont aptes à se replier pour éviter d'entraver le déplacement vers l'arrière desdits distributeurs à vis (17) et des étriers associés (12).

19. Machine selon la revendication 14, **caractérisée en ce que** lesdits moyens de définition de l'entraxe ("i") de la cage (10) comprennent des moyens de distribution à mouvement de va-et-vient (21, 121) disposés en coopération avec lesdits moyens de fixation se trouvant dans ladite position de fixation.

20. Machine selon la revendication 19, **caractérisée en ce que** lesdits moyens de distribution à mouvement de va-et-vient (21, 121) intègrent des moyens de soudage.

21. Machine selon l'une quelconque des revendications 14 à 20 incluse, **caractérisée en ce que** lesdites barres longitudinales (13) sont supportées par des moyens (29, 40) définissant un plan de support plus élevé par rapport au côté inférieur des étriers (12) disposés dans les distributeurs à vis associés (17).

22. Machine selon l'une quelconque des revendications 14 à 20 incluse, **caractérisée en ce qu'**elle comprend des moyens de signalisation aptes à signaler l'instant où le dernier étrier inséré entre lesdits distributeurs à vis (17) a atteint une position située à une distance de ladite position de chargement (14a) correspondant à la valeur de l'entraxe ("i") selon les cotes d'origine de la cage (10).

23. Machine selon la revendication 22, **caractérisée en ce que** lesdits moyens de signalisation comprennent des moyens visuels.

24. Machine selon la revendication 22, **caractérisée en ce que** lesdits moyens de signalisation comprennent des moyens destinés à mesurer la distance couverte en fonction de la vitesse de rotation desdits distributeurs à vis (17).

25. Machine selon l'une quelconque des revendications 14 à 24 incluse, **caractérisée en ce qu'**elle comprend des moyens de guidage aptes à permettre l'insertion d'une pluralité de barres longitudinales (13) à l'intérieur du périmètre des étriers (12), disposés en position dressée sur les distributeurs à vis associés (17).

26. Machine selon l'une quelconque des revendications 14 à 25 incluse, **caractérisée en ce que** l'un desdits distributeurs à vis latéraux (17) est associé à un support apte à permettre au moins d'ajuster sa position latérale relative afin de faire varier la distance par rapport à un distributeur à vis latéral (17) correspondant en vis-à-vis, en fonction de la forme et de la taille des étriers (12) à positionner/déplacer en translation.

27. Machine selon l'une quelconque des revendications 14 à 26 incluse, **caractérisée en ce que** ledit au moins un distributeur à vis (17) associé audit segment du côté inférieur des étriers (12) est associé à un support apte à permettre au moins d'ajuster sa position verticale par rapport au sol.

28. Machine selon l'une quelconque des revendications 14 à 27 incluse, **caractérisée en ce qu'**elle comprend des moyens (25) aptes à charger lesdits étriers (12) automatiquement sur lesdits distributeurs à vis (17), en correspondance avec ladite position de chargement (14a).
